# EUROPÄISCHE PATENTANMELDUNG

(11) **EP 2 543 877 A2**
(43) Veröffentlichungstag der Anmeldung: **09.01.2013**
(21) Anmeldenummer: 12175336.2
(22) Anmeldetag: 06.07.2012
(51) Int. Cl.: F03D 7/02, F03D 1/06

(54) **Windkraftanlage**

(30) Priorität: 08.07.2011 DE 102011107466
(71) Anmelder: Deutsches Zentrum für Luft- und Raumfahrt e.V., 51147 Köln (DE)
(72) Erfinder: Abildgaard, Max, 38108 Braunschweig (DE)
(74) Vertreter: Aisch, Sebastian

(57) **Zusammenfassung**

Die vorliegende Erfindung betrifft eine Windkraftanlage umfassend einen Anlageturm mit Rotorkopf, an dem eine Mehrzahl von Rotorblättern angeordnet sind, wobei die Windkraftanlage eine Dämpfungsvorrichtung (2) zur Vibrations- und/oder Schwingungsdämpfung aufweist, die mindestens ein Kraftelement (3), das mit einer Struktur (1) der Windkraftanlage derart zusammenwirkt, dass eine Kraft auf die Struktur (1) aufbringbar ist, und mindestens eine mit dem mindestens einen Kraftelement (3) verbundene Steuereinheit (4) umfasst, wobei die mindestens eine Steuereinheit (4) zum Ansteuern des Kraftelementes (3) derart eingerichtet ist, dass eine Kraft auf die Struktur (1) der Windkraftanlage aufgebracht und dadurch Vibrationen und/oder Schwingungen der Struktur (1) gedämpft werden.

## Beschreibung

Die Erfindung betrifft eine Windkraftanlage umfassend einen Anlageturm mit Rotorkopf, an dem eine Mehrzahl von Rotorblättern angeordnet sind.

Die Erfindung betrifft ebenso ein Rotorblatt hierzu.

Das Vorhandensein fossiler Brennstoffe ist auf unserem Planeten begrenzt. Zwar wird auch heute noch ein Großteil der benötigten Energie aus fossilen Brennstoffen gewonnen. Allerdings zeichnet sich mehr und mehr ein Wandel dahingehend ab, dass vermehrt auf regenerative Energiequellen zur Energiegewinnung gesetzt wird. Neben der Gefahr der Ressourcenverknappung der fossilen Brennstoffe wird dadurch auch gleichzeitig der Umweltverschmutzung und des damit einhergehenden Klimawandels entgegengewirkt.

Denn regenerative Energiequellen wie Wind- oder Sonnenenergie führen bei der Energiegewinnung nicht zum Ausstoß von dem Klima schädlichen CO₂, wie dies bei der Verbrennung fossiler Brennstoffe der Fall ist.

Nicht zuletzt durch politische Fördersysteme hat die Verbreitung von Windkraftanlagen in den letzten Jahren stark zugenommen, insbesondere im ländlichen Bereich. Eine Windkraftanlage besteht dabei in der Regel aus einem Anlagenturm, an dessen oberen Ende ein Rotorkopf, meist verschwenkbar, angeordnet ist. An dem Umfang des Rotorkopfes befinden sich dabei eine Mehrzahl von Rotorblättern, die aufgrund ihrer aerodynamischen Eigenschaft bei Anströmung durch eine Luftbewegung beziehungsweise Luftströmung den Rotorkopf in eine Drehbewegung versetzen. Durch im Rotorkopf oder im Anlagenturm angeordneten Energiewandlern, wie beispielsweise Generatoren, wird die durch den Wind und die Rotorblätter verursachte Drehbewegung des Rotorkopfes in elektrische Energie umgewandelt, die dann in ein Versorgungsnetz eingespeist werden kann.

Durch die großen ökologischen Vorteile derartiger Windkraftanlagen sowie der in einigen Ländern existierenden staatlichen Subventionierung für derartige ökologische Stromgewinnung werden oft die Interessen der in der näheren Umgebung derartiger Windkraftanlagen wohnenden Menschen vernachlässigt oder schlichtweg nicht berücksichtigt. Durch die starke Verbreitung von Windkraftanlagen stellt die Lärmbelastung der in der Umgebung wohnenden Menschen durch Windkraftanlagen ein wachsendes Problem dar. Zwar wird von einer Windkraftanlage während des Betriebes in der Regel eine niederfrequente Geräuschemission (< 20 Hz) erzeugt, deren Einfluss auf die in der Umgebung wohnenden Menschen bislang als relativ harmlos eingeschätzt wurde. Jüngste Forschungsergebnisse in dieser Richtung zeigen jedoch, dass auch solche niederfrequenten Geräuschemissionen von den Menschen wahrgenommen und als negativ empfunden werden, was eine deutlich negative Auswirkung auf die Lebensqualität in der näheren Umgebung von Windkraftanlagen wohnender Menschen hat.

Mit zunehmender Verbreitung der Windkraftanlagen und der dichten Besiedelung kommt es somit immer häufiger zu Konfliktfällen zwischen den Windkraftanlagen einerseits und denen in der Umgebung wohnenden Menschen andererseits. Es besteht daher ein Bedarf darin, nicht nur derartige Windkraftanlagen hinsichtlich ihres Wirkungsgrades effizienter zu gestalten, sondern die Windkraftanlagen so auszugestalten, dass die Lebensqualität der in der Umgebung wohnenden Menschen nicht beeinträchtigt wird.

### Aufgabe

Im Hinblick hierauf ist es somit Aufgabe der vorliegenden Erfindung eine verbesserte Windkraftanlage anzugeben, welche eine wesentlich reduzierte niederfrequente Geräuschemission aufweist, um so die Lebensqualität in der Umgebung befindlicher Menschen nicht zu beeinträchtigen.

### Lösung

Die Aufgabe wird mit einer Windkraftanlage der eingangs genannten Art erfindungsgemäß dadurch gelöst, dass die Windkraftanlage eine Dämpfungsvorrichtung zur Vibrations- und/oder Schwingungsdämpfung aufweist, die mindestens ein Kraftelement, das mit einer Struktur der Windkraftanlage derart zusammenwirkt, dass eine Kraft auf die Struktur aufbringbar ist, und mindestens eine mit dem mindestens einen Kraftelement verbundene Steuereinheit umfasst, wobei die mindestens eine Steuereinheit zum Ansteuern des Kraftelementes derart eingerichtet ist, dass eine Kraft auf die Struktur der Windkraftanlage aufgebracht und dadurch Vibrations- und/oder Schwingungen der Struktur gedämpft werden.

Der niederfrequente Lärm, der von einer Windkraftanlage ausgestrahlt wird, entsteht in der Regel durch die Bewegung des Rotorkopfes und der Rotorblätter im Strömungsfeld der Luftbewegung. Da eine Windkraftanlage derart strukturiert ist, dass ein Großteil der verwendeten Komponenten wie Anlageturm, Rotorkopf oder Rotorblätter im Inneren Höhlräume aufweisen, werden die von den Komponenten verursachten Schwingungen oder Vibrationen verstärkt, da die Komponenten der Windkraftanlage wie große Resonanzkörper wirken.

So führen Rotorblätter einer Windkraftanlage beispielsweise während der Bewegung im Luftströmungsfeld Schlagbewegungen aus, das heißt eine Ver- und Entkrümmung in axialer Richtung des Rotorblattes, die dann als niederfrequenter Lärm von den Menschen wahrnehmbar wird. Neben solchen Schlagbewegungen führt ein Rotorblatt oder andere Komponenten aber auch Volumenbewegungen oder Torsionsbewegungen aus, die den gleichen Effekt, nämlich das Ausstrahlen von Geräuschemissionen, haben.

Erfindungsgemäß wird nun vorgeschlagen, dass die Windkraftanlage zusätzlich eine Dämpfungsvorrichtung zur Vibrations- und Schwingungsdämpfung aufweist. Die Dämpfungsvorrichtung umfasst dabei mindestens ein Kraftelement und mindestens mit dem mindestens einen Kraftelement verbundene Steuereinheit, um das Kraftelement entsprechend ansteuern zu können. Das Kraftelement der Dämpfungsvorrichtung ist dabei derart an der Windkraftanlage angeordnet, dass es mit der Struktur der Windkraftanlage so zusammenwirkt, dass eine Kraft von dem Kraftelement auf die Struktur übertragbar ist. Die Steuereinheit ist dabei derart eingerichtet, dass sie das mindestens eine Kraftelement so ansteuert, dass die auf die Struktur aufgebrachte Kraft eine Vibration und/oder Schwingung der Struktur dämpft.

Die Steuereinheit kann beispielsweise so eingerichtet sein, dass das mindestens eine Kraftelement in Abhängigkeit von einer vordefinierten oder ermittelten Schwingung der Struktur zur Schwingungsdämpfung angesteuert wird. Dabei wirkt die von dem Kraftelement aufgebrachte Kraft entgegen der aufgrund der Strukturschwingung entstehenden Strukturverformung beziehungsweise Strukturbewegung.

Dadurch kann erreicht werden, dass die aufgrund einer Strukturbewegung entstehende Schallemission gedämpft wird, da bereits im Vorfeld die Strukturbewegung aufgrund einer durch das Kraftelement aufgebrachten Kraft auf die Struktur gedämpft und somit reduziert wird.

Die Struktur der Windkraftanlage umfasst dabei im Sinne der vorliegenden Erfindung jedwede Komponenten der Windkraftanlage, die aufgrund ihrer Größe und Oberfläche ein Schwingungssystem bilden können, das insbesondere niederfrequenten Lärm erzeugen und ausstrahlen kann. Vornehmlich sind hierbei alle stützenden Komponenten gemeint, wie beispielsweise die Hülle des Anlagenturms oder die Hülle der Rotorblätter.

Vorteilhafterweise ist das mindestens eine Kraftelement derart eingerichtet und wirkt mit der Struktur derart zusammen, dass die Kraft in Richtung einer Strukturinnenseite und/oder in Richtung einer Strukturaußenseite wirkt. Durch das Aufbringen einer Kraft in Richtung Strukturaußenseite und/oder in Richtung Strukturinnenseite der Struktur der Windkraftanlage können beispielsweise Schwingungen oder Vibrationen gedämpft werden, die durch derartige Strukturbewegungen entstehen.

Ganz besonders vorteilhaft ist es nun, wenn das mindestens eine Kraftelement mit zwei Elementen der Struktur derart zusammenwirkt, dass eine Kraft auf die beiden Strukturelemente in Richtung zueinander und/oder entgegengesetzt aufgebracht werden kann. Dies ist beispielsweise dann besonders vorteilhaft, wenn Volumenbewegungen beziehungsweise Volumenschwingungen der Rotorblätter gedämpft werden sollen. Hierzu wird das Kraftelement so angeordnet, dass es eine Kraft zwischen zwei Strukturelemente des Rotorblattes aufbringen kann, die entgegengesetzt der beiden Elemente wirken kann, also die beiden Elemente auseinanderdrückt, oder zueinander wirken kann, also die beiden Elemente zusammendrückt. Durch das richtige Ansteuern des Kraftelementes können dann derartige Volumenbewegungen gedämpft werden.

Daneben ist es weiterhin besonders vorteilhaft, wenn die Dämpfungsvorrichtung mindestens ein mit der Struktur der Windkraftanlage zusammenwirkendes Masseelement umfasst, das mit dem mindestens einen Kraftelement in Wirkverbindung steht. Das mit dem Masseelement in Wirkverbindung stehende Kraftelement ist dabei dann derart eingerichtet, dass eine Kraft auf das Masseelement durch das Kraftelement aufbringbar ist, so dass die aufgrund der aufgebrachten Kraft entstehende Bewegung des Masseelementes auf die Struktur der Windkraftanlage zur Schwingungs- oder Vibrationsdämpfung wirkt.

So kann das Masseelement beispielsweise mittels eines Fehlerelementes flexibel mit der Struktur der Windkraftanlage in Wirkverbindung stehen, so dass das Masseelement durch die Kraft des Kraftelementes in Bewegung versetzt werden kann, die sich dann als Kraft auf die Struktur überträgt und so einer Schwingungs- oder Vibrationsbewegung entgegenwirkt.

In einer besonderen Ausführungsform umfasst das Kraftelement mindestens einen Magneten und eine damit zusammenwirkende Spule, die derart miteinander zusammenwirken, dass eine Kraft in eine bestimmte Richtung beim Anlegen von elektrischer Energie aufgebracht werden kann. Dabei lässt sich beispielsweise eine Kraft in eine Richtung und eine Kraft entgegengesetzt dieser Richtung bei Veränderung der Polarität erreichen.

Ganz besonders vorteilhaft ist es nun, wenn die Dämpfungsvorrichtung mindestens zwei Kraftelemente aufweist, die mit der Struktur zusammenwirken und von der Steuereinheit derart angesteuert werden, dass die von den beiden Kraftelementen aufgebrachte Kraft auf die Struktur so wirkt, dass Torsionsbewegungen der Struktur der Windkraftanlage gedämpft werden. Erfolgt das Aufbringen einer Kraft durch die beiden Kraftelemente beispielsweise phasenverschoben, so kann hierdurch eine Torsionsbewegung der Struktur mittels der Kraftelemente erzeugt werden, die einer zu dämpfenden Torsionsbewegung entgegenwirkt.

In einer weiteren Ausführungsform ist das Kraftelement zum berührungslosen Aufbringen einer Kraft auf die Struktur zur Vibrations- und Schwingungsdämpfung ausgebildet. Eine derartige berührungslose Kraftübertragung kann beispielsweise über eine Magnetanordnung erfolgen, bei der durch Erzeugen unterschiedlicher elektrischer Felder ein an der Struktur angeordneter Permanentmagnet angezogen und abgestoßen wird, um so die Vibrationen oder Schwingungen zu dämpfen. Alternativ kann aber auch eine Schallerzeugungseinheit als Kraftelement, wie beispielsweise ein Lautsprecher, vorgesehen sein, der Schallwellen im Inneren der Struktur der Windkraftanlage erzeugt und somit über die Struktur-Luft-Kopplung eine Kraft mittels der Schallwellen auf die Struktur überträgt, so dass ebenfalls Vibrationen und/oder Schwingungen der Struktur gedämpft werden können. Ein derartiger Lautsprecher könnte beispielsweise in der Nabe des Rotorblattes sitzen, so dass kein zusätzlicher Verkabelungs- und Installationsaufwand notwendig wird.

In einer weiteren Ausführungsform ist das Kraftelement zum Aufbringen einer Vibrationskraft auf die Struktur ausgebildet, beispielsweise in Form eines Elektromotors mit einer exzentrisch angeordneten Masse. Bei mehreren Elektromotoren mit unterschiedlichen Drehgeschwindigkeiten können auch mehrere Frequenzen gedämpft werden.

Da die von der Windkraftanlage erzeugten Schallemissionen von vielerlei Faktoren, insbesondere von der Drehgeschwindigkeit und des Anströmwinkels der Rotorblätter, abhängen, ist es ganz besonders vorteilhaft, wenn die Steuereinheit mit einem Schwingungs- und/oder Vibrationssensor verbunden ist, der in regelmäßigen oder unregelmäßigen Abständen die Schwingungen oder Vibrationen der Struktur aufzeichnet. Anhand des Vibrations- und Schwingungsmusters kann dann die Steuereinheit entsprechend eingestellt werden, damit das mindestens eine Kraftelement optimal angesteuert wird und die Vibration beziehungsweise Schwingung entsprechend dämpft und nicht noch verstärkt.

So ist es beispielsweise denkbar, dass in bestimmten festgelegten Zeitabständen solche Schwingungs- oder Vibrationsmessungen durchgeführt werden, umso immer auf die sich stetig ändernden Randbedingungen wie Windgeschwindigkeit, Windausrichtung und dergleichen entsprechend reagieren zu können. Ein weiterer Vorteil besteht darin, dass das System vollständig autark arbeiten kann und keinerlei Anpassung von außen bedarf.

Im Übrigen wird die Aufgabe auch mit einem Rotorblatt für Windkraftanlagen gelöst, die eine Dämpfungsvorrichtung mit den voranstehenden Merkmalen aufweist, wobei die Dämpfungsvorrichtung mindestens ein Kraftelement, das mit einer Struktur des Rotorblattes derart zusammenwirkt, dass eine Kraft auf die Rotorblattstruktur aufbringbar ist, und die mindestens eine mit dem mindestens einen Kraftelement verbundene Steuereinheit umfasst, wobei die mindestens eine Steuereinheit zum Ansteuern des mindestens einen Kraftelementes derart eingerichtet ist, dass eine Kraft auf die Struktur des Rotorblattes aufgebracht und dadurch Vibrationen und/oder Schwingungen des Rotorblattes gedämpft werden.

Die Erfindung wird anhand der beigefügten Zeichnungen beispielhaft näher erläutert. Es zeigen:
- Figur 1: - schematische Darstellung einer Dämpfung zwischen zwei Strukturelementen einer Windkraftanlage;
- Figur 2: - schematische Darstellung einer Strukturdämpfung mittels eines Masseelementes.

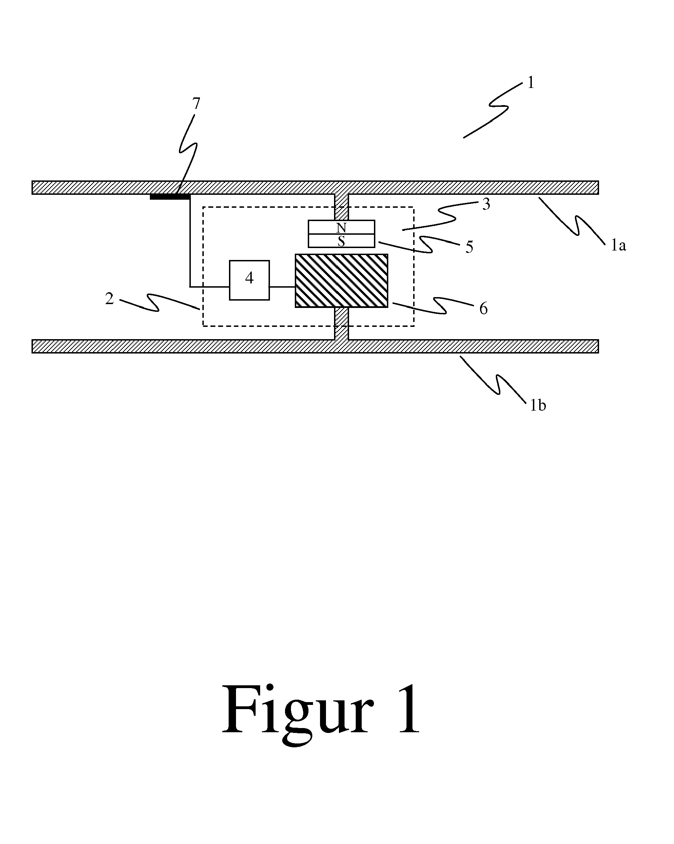

Figur 1 zeigt schematisch die Darstellung einer Strukturdämpfung zwischen zwei Strukturelementen 1a und 1 b einer Struktur 1 einer Windkraftanlage. Die beiden Strukturelemente 1a und 1 b können dabei beispielsweise die obere und die untere Hälfte eines Rotorblattes einer Windkraftanlage sein, die aufgrund der Drehbewegung und der Anströmung durch die Luftmassen in Vibration und Schwingung versetzt werden. Eine solche Schwingung, die mit Hilfe der vorliegenden Erfindung gedämpft werden soll, kann beispielsweise eine sogenannte Volumenresonanz sein, bei der sich die beiden Strukturelemente 1a und 1 b periodisch voneinander wegbewegen oder sich aufeinander zubewegen. Hierfür befindet sich im Inneren der Struktur 1 eine Dämpfungsvorrichtung 2, die ein Kraftelement 3 und eine Steuereinheit 4 umfasst. Das Kraftelement 3 besteht dabei aus einem Permanentmagneten 5 und einer Spule 6, so dass beim Anlegen einer elektrischen Spannung an die Spule 6 eine Kraft mittels des Permanentmagneten 5 erzeugt werden kann. An dieser Stelle sind selbstverständlich aber auch eine ganze Reihe anderer Ausführungsformen des Kraftelementes 3 denkbar, beispielsweise elektromechanische oder hydraulische Aktuatoren beziehungsweise Kraftelemente.

Die Steuereinheit 4 ist dabei mit dem Kraftelement 3, insbesondere mit der Spule 6, verbunden und derart eingerichtet, dass sie das Kraftelement 3 entsprechend ansteuern kann, damit das Kraftelement eine Kraft K aufbringen kann. Die Steuereinheit 4 ist dabei vorteilhafterweise mit einem Sensor 7 verbunden, der beispielsweise permanent die Entfernung zwischen dem oberen Strukturelement 1a und dem unteren Strukturelement 1b ermitteln kann. Aus einer Entfernungsveränderung über die Zeit lässt sich daraus dann eine Vibration oder Schwingung der Struktur 1 ableiten. Nachdem eine solche Vibration oder Struktur mit Hilfe des Sensors 7 detektiert wurde, kann die Steuereinheit dann in Abhängigkeit des detektierten Ergebnisses das Kraftelement 3 entsprechend ansteuert, damit die zuvor ermittelte Vibration oder Schwingung der Struktur 1 gedämpft wird.

Im Ausführungsbeispiel der Figur 1 ist das Kraftelement 3 derart in der Struktur 1 angeordnet, dass es die beiden Strukturelemente 1a und 1 b zusammen- oder auseinanderdrücken kann. Somit lassen sich Schwingungen, die aufgrund einer Volumenresonanz der Struktur 1 entstehen, entsprechend dämpfen, indem das Kraftelement 1 der Dämpfungsvorrichtung 2 so angesteuert wird, dass einer periodischen Strukturbewegung mit Hilfe einer von dem Kraftelement 3 aufgebrachten Kraft entgegengewirkt wird.

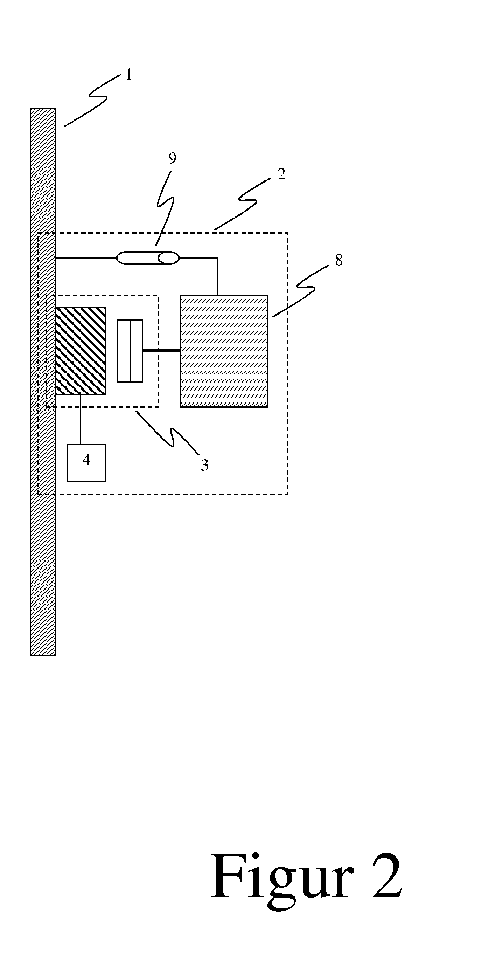

Figur 2 zeigt ein Ausführungsbeispiel, bei dem eine Kraft ohne einen entsprechenden Gegenhalt aufgebracht werden kann. Dies ist beispielsweise bei großen Strukturen wie dem Anlageturm der Windkraftanlage oder extrem überdimensionierten Rotorblättern denkbar.

Im Ausführungsbeispiel der Figur 2 ist das Kraftelement 3, das hier wieder aus einem Permanentmagneten 5 und einer entsprechenden Spule 6 besteht, mit einem Masseelement 8 derart verbunden, dass eine von dem Kraftelement 3 erzeugte Kraft auf das Masseelement 8 aufbringbar ist. Das Masseelement 8 ist wiederum über beispielsweise ein Federelement 9 mit der Struktur 1 verbunden, damit entsprechende Schwingungen oder Vibrationen der Struktur 1 gedämpft werden können. Wird mit Hilfe des Kraftelementes 3 eine Kraft auf das Masseelement 8 aufgebracht, so wird dies in Bewegung versetzt, wobei sich die Bewegungskraft der Masse 8 über die Wirkverbindung 9 auf die Struktur 1 überträgt. Wird das Kraftelement 3 nun von der Steuereinheit 4 zum richtigen Zeitpunkt angeregt, so lässt sich mit Hilfe der Bewegung der Masse 8 und der damit verbundenen Kraftübertragung auf die Struktur 1 eine entsprechende Schwingung oder Vibration dämpfen.

Dabei lassen sich beispielsweise auch Torsionsbewegungen beziehungsweise Torsionsschwingungen einer Struktur 1 dämpfen, indem beispielsweise mehrere solcher Dämpfungsvorrichtungen 2 an einer Struktur 1 angeordnet sind, die dann leicht phasenverschoben entsprechend der Torsionsbewegung angesteuert werden. Dadurch lassen sich Drehmomente auf die Struktur 1 übertragen, die einer unerwünschten Torsionsbewegung entgegenwirken können.

## Patentansprüche

1. Windkraftanlage umfassend einen Anlageturm mit Rotorkopf, an dem eine Mehrzahl von Rotorblättern angeordnet sind, **dadurch gekennzeichnet, dass** die Windkraftanlage eine Dämpfungsvorrichtung (2) zur Vibrations- und/oder Schwingungsdämpfung aufweist, die mindestens ein Kraftelement (3), das mit einer Struktur (1) der Windkraftanlage derart zusammenwirkt, dass eine Kraft auf die Struktur (1) aufbringbar ist, und mindestens eine mit dem mindestens einen Kraftelement (3) verbundene Steuereinheit (4) umfasst, wobei die mindestens eine Steuereinheit (4) zum Ansteuern des Kraftelementes (3) derart eingerichtet ist, dass eine Kraft auf die Struktur (1) der Windkraftanlage aufgebracht und dadurch Vibrationen und/oder Schwingungen der Struktur (1) gedämpft werden.

2. Windkraftanlage nach Anspruch 1, **dadurch gekennzeichnet, dass** das mindestens eine Kraftelement (3) zum Aufbringen einer Kraft auf die Struktur (1) derart eingerichtet ist und mit dieser zusammenwirkt, dass die Kraft in Richtung einer Strukturinnenseite und/oder in Richtung einer Strukturaußenseite der Struktur (1) der Windkraftanlage wirkt.

3. Windkraftanlage nach Anspruch 1 oder 2, **dadurch gekennzeichnet, dass** das mindestens eine Kraftelement (3) mit zwei Elementen (1a, 1 b) der Struktur (1) zum Aufbringen einer Kraft derart zusammenwirkt, dass die Kraft in Richtung der beiden Elemente (1a, 1 b) zueinander und/oder entgegengesetzt der beiden Elemente (1 a, 1 b) wirkt.

4. Windkraftanlage nach einem der vorhergehenden Ansprüche, **dadurch gekennzeichnet, dass** die Dämpfungsvorrichtung (2) mindestens ein mit der Struktur (1) der Windkraftanlage zusammenwirkendes Masseelement (8) umfasst und dass mindestens eine Kraftelement (3) mit dem Masseelement (8) in Wirkverbindung steht und zum Aufbringen einer Kraft auf das Masseelement (8) derart eingerichtet ist, dass eine aufgrund der aufgebrachten Kraft entstehende Bewegung des Masseelementes (8) auf die Struktur (1) der Windkraftanlage als Kraft zur Vibrations- und/oder Schwingungsdämpfung wirkt.

5. Windkraftanlage nach einem der vorherigen Ansprüche, **dadurch gekennzeichnet, dass** das mindestens eine Kraftelement (3) mindestens einen Magneten (5) und mindestens eine damit zusammenwirkende Spule (6) hat, die zum Aufbringen einer Kraft mittels elektrischer Energie ausgebildet sind.

6. Windkraftanlage nach einem der vorherigen Ansprüche, **dadurch gekennzeichnet, dass** die Dämpfungsvorrichtung (2) mindestens zwei Kraftelemente (3) umfasst und die mindestens eine Steuereinheit (4) zum Ansteuern der mindestens zwei Kraftelemente (3) derart eingerichtet ist, dass durch die aufgebrachte Kraft der Kraftelemente (3) auf die Struktur (1) eine Torsionsbewegung der Struktur gedämpft wird.

7. Windkraftanlage nach einem der vorherigen Ansprüche, **dadurch gekennzeichnet, dass** das Kraftelement zum berührungslosen Aufbringen einer Kraft auf die Struktur der Windkraftanlage zur Vibrations- und/oder Schwingungsdämpfung ausgebildet ist.

8. Windkraftanlage nach einem der vorherigen Ansprüche, **dadurch gekennzeichnet, dass** die Dämpfungsvorrichtung (2) mindestens einen mit der Struktur (1) der Windkraftanlage zusammenwirkenden Schwingungs- und/oder Vibrationssensor (7) hat, der zum Ermitteln von Schwingungs- und/oder Vibrationsinformationen der Struktur (1) ausgebildet ist, wobei die mindestens eine Steuereinheit (4) zum Ansteuern des mindestens einen Kraftelementes (3) in Abhängigkeit von den Schwingungs- und/oder Vibrationsinformationen eingerichtet ist.

9. Rotorblatt für eine Windkraftanlage aufweisend eine Dämpfungsvorrichtung (2) mit den Merkmalen nach einem der vorherigen Ansprüche, die mindestens ein Kraftelement (3), das mit einer Struktur des Rotorblattes derart zusammenwirkt, dass eine Kraft auf die Struktur (1) aufbringbar ist und die mindestens eine mit dem mindestens einen Kraftelement (3) verbundene Steuereinheit (4) umfasst, wobei die mindestens eine Steuereinheit (4) zum Ansteuern des mindestens einen Kraftelementes (3) derart eingerichtet ist, dass eine Kraft auf die Struktur (1) des Rotorblattes aufgebracht und dadurch Vibrationen und/oder Schwingungen der Rotorblattstruktur (1) gedämpft werden.
